# EUROPEAN PATENT APPLICATION

(11) **EP 4 071 862 A1**
(43) Date of publication of application: **12.10.2022**
(21) Application number: 19955258.9
(22) Date of filing: 02.12.2019
(51) Int. Cl.: H01M 4/66, H01M 10/0525

(54) **ANISOTROPIC COLLECTOR FOR LITHIUM-ION BATTERY, AND MANUFACTURING METHOD THEREFOR AND APPLICATION THEREOF**

(71) Applicant: Hefei Gotion High-Tech Power Energy Co., Ltd., Hefei, Anhui 230012 (CN)
(72) Inventor: ZHANG, Ya, Hefei, Anhui 230012 (CN); CHENG, Qian, Hefei, Anhui 230012 (CN); CAI, Steven, Hefei, Anhui 230012 (CN); LI, Chen, Hefei, Anhui 230012 (CN)
(74) Representative: HGF
(86) International application number: PCT/CN2019/122331
(87) International publication number: WO 2021/108944

(57) **Abstract**

Disclosed are an anisotropic collector for a lithium-ion battery, and a manufacturing method therefor and an application thereof. The collector is made of a resin material added with spherical metal particles. Conductive particles of the collector in an X-Y direction do not form a sufficient conductive network, but form a good conductive network in a Z direction. While a short circuit occurs, the collector is not easy to activate most of active materials in the X-Y direction so that thermal runaway is not easy to occur, but the collector may fully conduct electricity in the Z direction so that the battery may be normally charged and discharged, thereby improving battery safety.

## Description

### Technical Field

The present disclosure relates to an anisotropic collector for a high-density lithium-ion battery and a manufacturing method therefor and an application thereof.

### Background

In the past two decades, lithium-ion batteries become the most important power source for new energy vehicles. In order to make it widely available, it is necessary to further reduce the cost of the lithium-ion batteries while its performance is improved. In addition, in order to improve the driving mileage of electric vehicles, the industry still pursues the lithium-ion batteries with the higher energy density continuously. For the design of the electric vehicles, compared to the improvement of the energy density of a single cell, the improvement of the energy density of the entire Pack may meet the requirements of the electric vehicles for a Pack design in the case of guaranteeing the safety. In addition, an existing battery pack design is composed of Cell→Module→Pack, and the complexity and space utilization rate of the design are further increased.

### Summary

A purpose of the present disclosure is to provide a method for preparing an anisotropic collector with simple operation and large area.

Another purpose of the present disclosure is to provide an anisotropic collector prepared by the above method.

Another purpose of the present disclosure is to provide an application of the above collector.

The present disclosure is achieved by the following technical schemes.

In one aspect, the present disclosure provides a collector, and it is made of a resin material added with spherical metal particles, herein the spherical metal particles form a conductive path, the width of the conductive path is 500 nm-20 µm, the distance between adjacent conductive paths is 500 nm-20 µm, and the diameter of the spherical metal particles is 500 nm-20 µm.

In the collector of the present disclosure, the spherical metal particles and the resin material are distributed at intervals, herein the conductive spherical metal particles form the conductive path; and in an X-Y direction, the number of the conductive particles forming the conductive paths does not exceed 20% of the total number of the conductive particles.

In a specific embodiment of the present disclosure, a single spherical metal particle is arranged in a row to form the conductive path, namely the width of the conductive path needs to be equal to the diameter of the metal particle.

In a specific embodiment of the present disclosure, in a Z direction, the conductive particles are used for conducting electricity, and the number of the conductive particles forming the conductive path is not less than 60% of the total number of the conductive particles.

According to a specific implementation scheme of the present disclosure, in the collector of the present disclosure, the spherical metal particles used are metals that do not generate an alloying reaction with lithium ions. For example, the spherical metal particles used may be one or a combination of two or more of nickel, gold, silver, platinum, titanium, and copper. The spherical metal particles used may be solid, hollow or spherical metal particles having a core-shell structure. For example, the spherical metal particles of the core-shell structure may be formed by one metal, or may be the spherical metal particles with the core-shell structure formed by a plurality of metals.

In the collector of the present disclosure, a polyolefin-based material may be used as the resin material (organic matrix), for example, a copolymer or a mixture formed by one or a combination of two or more of a high-density polyethylene, a low-density polyethylene, a polypropylene, a polybutene, a polymethylpentene and the like. According to the relative density, it is divided into the low-density polyethylene (LDPE) and the high-density polyethylene (HDPE), the density of LDPE is 0.91-0.925 g/cm³ and the density of HDPE is >0.94 g/cm³.

The above resin material is more stable in potential relative to a positive electrode and a negative electrode, and has the lower density than the metal, so it is beneficial to improve the weight energy density of the battery. For example, charge-discharge voltage range: 2.5-3.8V (LiFePO₄ (LFP)); 2.5-4.2V (Nickel-Cobalt-Manganese (NCM)); positive compaction density: 2.3-2.6 g/cc (LFP); 3.5-3.8 g/cc (NCM); and negative compaction density: 1.3-1.7 g/cc (graphite).

In the collector of the present disclosure, the volume percentage of the spherical metal particles accounting for the collector is 30wt%-70wt%.

The thickness of the anisotropic resin collector of the present disclosure is preferably 5-30 µm. More preferably, the thickness of the collector is less than 20 µm, preferably less than 15 µm, and more preferably less than 10 µm.

According to a specific implementation scheme of the present disclosure, the surface impedance of the collector of the present disclosure is lower than 15 mohm/sq, or lower than 10 mohm/sq.

The collector of the present disclosure adopts the resin filled with the spherical metal particles as the collector. Most of the spherical metal particles in the X-Y direction are not connected, and have only lower conductivity. The Z direction conducts electricity through the spherical metal particles, and has higher conductivity. While a short circuit occurs, only a few active materials may be activated in the X-Y direction, and thermal runaway may not eventually occur. In the present disclosure, the X-Y direction is a horizontal direction of the collector, and the Z direction is a thickness direction (vertical axis direction) of the collector.

The density of the collector of the present disclosure is lower than that of the metal, and a higher weight energy density may be achieved. The density of the collector is 0.3 g/cc-0.8 g/cc, the energy density of LFP (lithium iron phosphate battery) may be 170 Wh/kg-190 Wh/kg, and the energy density of NCM (nickel-cobalt-manganate lithium battery) may be 200 Wh/kg- 280 Wh/kg.

On the other hand, the present disclosure further provides a preparation method for the anisotropic collector, the method is mainly to prepare an anisotropic resin collector by a melt stretching method, including:
heating a resin to above the melting temperature, and mixing it with spherical metal particles uniformly; and
extruding a molten mixture added with the spherical metal particles into a cooling chamber, rapidly increasing the viscosity of the mixture while cooled to form a film, and then stretching the film to the corresponding thickness and internal structure by a group of stretching rollers.

Both the thickness and the orientation degree of the collector of the present disclosure depend on the ratio of the resin to the spherical metal particles, the preheating temperature of a melting furnace and the stretching rate of a mechanical drum.

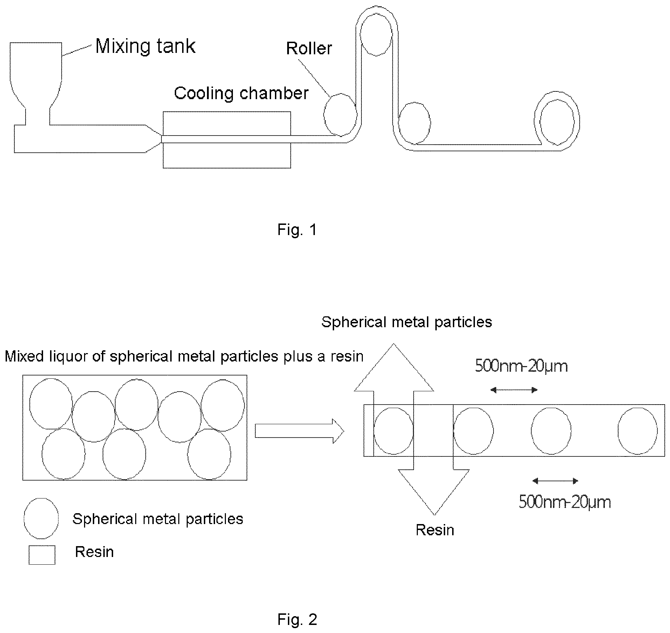

An anisotropic resin collector with a specific conductive path structure is formed by the melt stretching method (Fig. 2).

According to a specific embodiment of the present disclosure, the preheating temperature of the melting furnace may be 80°C.

According to a specific embodiment of the present disclosure, the stretching speed of the mechanical drum may be 10 m/min-40 m/min, and the stretching tension may be 5 N-25 N.

In the preparation method of the present disclosure, by controlling the stretching of the mechanical drum, the collector is stretched transversely, and the spacing distance between the particles may be controlled, thereby the width of the conductive path is controlled. In a specific embodiment of the present disclosure, the width of the conductive path is controlled to be the diameter of the spherical metal particles.

On the other hand, the present disclosure further provides an application of the collector.

The collector of the present disclosure may be used to prepare a lithium-ion battery. While the lithium-ion battery is prepared, the design of a single cell stacked in series may save a connection electrode piece between the single batteries, improve the volume efficiency, and be suitable for vehicle use.

In the present disclosure, the resin using the spherical metal particles as a filler is used to prepare the collector, and the collector is characterized in that the conductive particles in the X-Y direction do not form a sufficient conductive network, but form a good conductive network in the Z direction, and while a short circuit occurs, the collector is not easy to activate most of active materials in the X-Y direction so that thermal runaway does not occur easily, but may conduct electricity sufficiently in the Z direction, so that the battery may be charged and discharged normally. Thus, the battery safety is improved.

### Brief Description of the Drawings

Fig. 1 is a flow diagram of a preparation process of a collector of Embodiment 1.
Fig. 2 is a schematic diagram of a process for forming an anisotropic collector with a conductive path structure.

### Detailed Description of the Embodiments

In order to have clearer understanding of technical features, purposes and beneficial effects of the present disclosure, technical schemes of the present disclosure are now described in detail below in combination with the drawings and specific embodiments. It should be understood that these embodiments are only used to describe the present disclosure and not to limit a scope of the present disclosure. In the embodiments, experimental methods without specific conditions are conventional methods and conventional conditions well-known in the field, or operated in accordance with conditions suggested by instrument manufacturers.

### Contrast example 1

Positive electrode: LFP (10 µm)
Negative electrode: artificial graphite (20 µm)
Diaphragm: 12 µm PE + 2 µm Al₂O₃
Size: 600L×300W×1Tmm single cell structure
Collector: positive electrode (Al, 12 µm in thickness); and negative electrode (Cu, 8 µm in thickness)
Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 1

Positive electrode: LFP (10 µm)
Negative electrode: artificial graphite (20 µm)
Diaphragm: 12 µm PE+2 µm Al₂O₃
Size: 600L*300W*1Tmm single cell structure

Collector: positive electrode (50wt% nickel ball (5 µm in diameter) + 50wt% PP, 5 µm in thickness); negative electrode (50wt% nickel ball (5 µm in diameter) + 50wt% PP, 5µm in thickness). Herein, spherical metal particles form a conductive path, the width of the conductive path is 5 µm, the distance between adjacent conductive paths is 3 µm, and the diameter of the spherical metal particles is 5 µm. In an X-Y direction, the number of the spherical metal particles forming the conductive path is 20% of the total number of the conductive particles. The collector is prepared according to the following steps, as shown in Fig. 1:
a resin is heated to above the melting temperature, and mixed with the spherical metal particles uniformly, and the preheating temperature of a melting furnace is 80°C; and
a molten mixture added with the spherical metal particles is extruded into a cooling chamber, the viscosity of the mixture is rapidly increased to form a film while cooled, and then the film is stretched by a group of stretching rollers (stretching speed: 15 m/min, and the stretching tension is 15 N), to obtain the collector. The thickness is 5 µm, and the surface impedance is 13 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 2

Positive electrode: LFP (10 µm)
Negative electrode: artificial graphite (20 µm)
Diaphragm: 12 µm PE+2 µm Al₂O₃
Size: 600L×300W×1Tmm single cell structure

Collector: positive electrode (50wt% nickel ball (10 µm in diameter) + 50wt% PP, 10 µm in thickness); negative electrode (50wt% nickel ball (10 µm in diameter) + 50wt% PP, 10 µm in thickness). Herein, spherical metal particles form a conductive path, the width of the conductive path is 10 µm, the distance between adjacent conductive paths is 5 µm, and the diameter of the spherical metal particles is 10 µm. In an X-Y direction, the number of the spherical metal particles forming the conductive path is 20% of the total number of the conductive particles. The collector is prepared according to the following steps:
a resin is heated to above the melting temperature, and mixed with the spherical metal particles uniformly, and the preheating temperature of a melting furnace is 80°C; and
a molten mixture added with the spherical metal particles is extruded into a cooling chamber, the viscosity of the mixture is rapidly increased to form a film while cooled, and then the film is stretched by a group of stretching rollers (stretching speed: 10 m/min, and the stretching tension is 15 N), to obtain the collector. The thickness is 10 µm, and the surface impedance is 12 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 3

Positive electrode: LFP (10 µm)
Negative electrode: artificial graphite (20 µm)
Diaphragm: 12 µm PE+2 µm Al₂O₃
Size: 600L×300W×1Tmm single cell structure

Collector: positive electrode (50wt% hollow nickel ball (10 µm in diameter) + 50wt% PP, 10 µm in thickness, and the thickness of an shell is 1 µm); negative electrode (50wt% hollow nickel ball (10 µm in diameter) + 50wt% PP, 10 µm in thickness, and the thickness of an shell is 1 µm). Herein, spherical metal particles form a conductive path, the width of the conductive path is 10 µm, the distance between adjacent conductive paths is 5 µm, and the diameter of the spherical metal particles is 10 µm. In an X-Y direction, the number of the spherical metal particles forming the conductive path is 20% of the total number of the conductive particles. The collector is prepared according to the following steps:
a resin is heated to above the melting temperature, and mixed with the spherical metal particles uniformly, and the preheating temperature of a melting furnace is 80°C; and
a molten mixture added with the spherical metal particles is extruded into a cooling chamber, the viscosity of the mixture is rapidly increased to form a film while cooled, and then the film is stretched by a group of stretching rollers (stretching speed: 15 m/min, and the stretching tension is 10 N), to obtain the collector. The thickness is 10 µm, and the surface impedance is 15 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

### Embodiment 4

Positive electrode: LFP (10 µm)
Negative electrode: artificial graphite (20 µm)
Diaphragm: 12 µm PE+2 µm Al₂O₃
Size: 600L×300W×1Tmm single cell structure

Collector: positive electrode (50wt% nickel-coated aluminum (core-shell) wrapping spherical particles (10 µm in diameter) + 50wt% PP, 10 µm in thickness; and a coating layer is 1 µm); and negative electrode (50wt% nickel-coated copper (core-shell) wrapping spherical particles (10 µm in diameter, and a coating layer is 1 µm) + 50wt% PP, 10 µm in thickness). Herein, spherical metal particles form a conductive path, the width of the conductive path is 10 µm, the distance between adjacent conductive paths is 5 µm, and the diameter of the spherical metal particles is 10 µm. In an X-Y direction, the number of the spherical metal particles forming the conductive path is 20% of the total number of the conductive particles. The collector is prepared according to the following steps:
a resin is heated to above the melting temperature, and mixed with the spherical metal particles uniformly, and the preheating temperature of a melting furnace is 80°C; and
a molten mixture added with the spherical metal particles is extruded into a cooling chamber, the viscosity of the mixture is rapidly increased to form a film while cooled, and then the film is stretched by a group of stretching rollers (stretching speed: 10 m/min, and the stretching tension is 10 N), to obtain the collector. The thickness is 10 µm, and the surface impedance is 15 mohm/sq.

Acupuncture experiment: at a temperature of 20±5°C, a battery is in a full point state (SOC100), a steel needle with a diameter of 3 mm is used to penetrate rapidly in a direction perpendicular to an electrode plate, and the steel needle stays in it.

The batteries of Contrast example 1 and Embodiments 1-4 are tested as shown in Table 1, and results are shown in Table 1.

**Table 1**

| | | Contrast example 1 | Embodiment 1 | Embodiment 2 | Embodiment 3 | Embodiment 4 |
|---|---|---|---|---|---|---|
| Positive electrode | | LFP | LFP | LFP | LFP | LFP |
| Negative electrode | | Artificial graphite | Artificial graphite | Artificial graphite | Artificial graphite | Artificial graphite |
| Collector | Positive electrode | Al, 12µm in thickness | 50wt% nickel ball (5 µm in diameter) + 50wt% PP, 5 µm in thickness | 50wt% nickel ball (10 µm in diameter) + 50wt% PP, 10 µm in thickness | 50wt% hollow nickel ball (10 µm in diameter) + 50wt% PP, 10 µm in thickness | 50wt% nickel-coated aluminum (core-shell) wrapping spherical particles (10 µm in diameter) + 50wt% PP, 10 µm in thickness |
| | Negative electrode | Cu, 8µm in thickness | 50wt% nickel ball (5 | 50wt% nickel ball | 50wt% hollow | 50wt% nickel- |
| | | | µm in diameter) + 50wt% PP, 5 µm in thickness | (10 µm in diameter) + 50wt% PP, 10 µm in thickness | nickel ball (10 µm in diameter) + 50wt% PP, 10 µm in thickness | coated copper(core-shell) wrapping spherical particles (10 µm in diameter) + 50wt% PP, 10 µm in thickness |
| Single cell length (mm) | | 600 | 600 | 600 | 600 | 600 |
| Single cell width (mm) | | 300 | 300 | 300 | 300 | 300 |
| Single cell height (mm) | | 1 | 1 | 1 | 1 | 1 |
| Single cell energy density (Wh/kg) | | 190 | 210 | 205 | 220 | 203 |
| Single cell energy density (Wh/L) | | 390 | 420 | 395 | 395 | 395 |
| Single cell capacity (Ah) | | 66 | 66 | 66 | 66 | 66 |
| First effect (%) | | 94 | 91 | 93 | 93 | 93 |
| Cycle | | 2000 | 1500 | 2000 | 2000 | 2000 |
| EOL DCIR | | 120% | 125% | 120% | 120% | 120% |
| Pack energy density (Wh/kg) | | 152 | 164 | 160 | 178 | 162 |
| Pack energy density (Wh/L) | | 187 | 250 | 260 | 260 | 260 |
| 1C/0.1C | | 90% | 89% | 90% | 91% | 93% |
| 6C/0.1C | | 71% | 67% | 69% | 70% | 75% |
| Acupuncture experiment (HL) | 5 | 3 | 3 | 3 | 3 | |

It may be seen from Table 1 that, the resin-based collector of the present disclosure is used, the volume energy density of Pack and the safety performance of the battery are both greatly improved (acupuncture experiment).

## Claims

1. A collector, which is made of a resin material added with spherical metal particles, wherein the spherical metal particles form a conductive path, the width of the conductive path is 500nm-20µm, the distance between adjacent conductive paths is 500nm-20µm, and the diameter of the spherical metal particles is 500nm-20µm.

2. The collector according to claim 1, wherein the spherical metal particles are metals that do not generate an alloying reaction with lithium ions; and
preferably, the spherical metal particles is selected from one or a combination of two or more of nickel, gold, silver, platinum, titanium, and copper.

3. The collector according to claim 1 or 2, wherein the spherical metal particles is solid, hollow or spherical metal particles having a core-shell structure.

4. The collector according to claim 1, wherein the volume percentage of the spherical metal particles accounting for the collector is 30wt%-70wt%.

5. The collector according to claim 1, wherein the resin material is a polyolefin-based material, for example, a copolymer or a mixture of one or a combination of two or more of a high-density polyethylene, a low-density polyethylene, a polypropylene, a polybutene, and a polymethylpentene.

6. The collector according to claim 1, wherein the spherical metal particles and the resin material are distributed at intervals, and in an X-Y direction, the number of the conductive particles forming the conductive paths does not exceed 20% of the total number of the conductive particles.

7. The collector according to claim 1, wherein the thickness of the collector is 5-20µm; and preferably, the thickness of the collector is less than 20µm, further preferably less than 15µm, and more preferably less than 10µm.

8. The collector according to claim 1, wherein the surface impedance is lower than 15mohm/sq, preferably lower than 10mohm/sq.

9. The collector according to claim 1, wherein the density of the collector is 0.3g/cc-0.8g/cc.

10. A method for preparing the collector according to any one of claims 1-9, wherein the method comprises:
heating a resin to above the melting temperature, and mixing it with spherical metal particles uniformly; and
extruding a molten mixture added with the spherical metal particles into a cooling chamber, rapidly increasing the viscosity of the mixture while cooled to form a film, and then stretching the film to the corresponding thickness and internal structure by a group of stretching rollers.

11. The method according to claim 10, wherein the preheating temperature of a melting furnace is 80°C; and
preferably, the stretching speed of a mechanical drum is 10m/min-40m/min, and the stretching tension is 5N-25N.

12. An application of the collector according to any one of claims 1-9 in preparing a lithium-ion battery.
